## Europäisches Patentamt
## European Patent Office
## Office européen des brevets

(11) Numéro de publication: **0 052 023**
**B1**

(12) # FASCICULE DE BREVET EUROPEEN

(45) Date de publication du fascicule du brevet:
16.05.84

(51) Int. Cl.³: **B 23 Q 3/155**

(21) Numéro de dépôt: 81401449.4

(22) Date de dépôt: 17.09.81

(54) Machine-outil à commande numérique avec magasin d'outils.

(30) Priorité: 07.11.80 FR 8023795

(43) Date de publication de la demande:
19.05.82 Bulletin 82/20

(45) Mention de la délivrance du brevet:
16.05.84 Bulletin 84/20

(84) Etats contractants désignés:
**CH DE GB IT LI SE**

(56) Documents cités:
**CH - A - 480 110**
**DE - A - 2 031 219**
**DE - A - 2 217 605**
**FR - A - 2 305 273**

**Photocopie d'un tour horizontal présenté par la soClété SANDUTE-COROMANT à L'EXPOSITION DE LA MACHON Outil de Chicago en 1978 (Nr. 38)**

(73) Titulaire: **H. ERNAULT-SOMUA Société dite:, 32, avenue de l'Europe, F-78140 Vélizy-Villacoublay (FR)**

(72) Inventeur: **Berly, Marcel, 42, chemin des Hauts Graviers, F-91370 Verrieres le Buisson (FR)**

(74) Mandataire: **Loriot, Jacques et al, c/o SA. FEDIT-LORIOT 38, avenue Hoche, F-75008 Paris (FR)**

BUNDESDRUCKEREI BERLIN

## Machine-outil à commande numérique avec magasin d'outils

L'invention concerne les machines-outils, notamment les tours, à commande numérique avec magasin d'outils et plateau rotatif porte-outils porté par un organe de la machine mobile dans les directions de deux mouvements contrôlés par la commande numérique de la machine.

Pour assurer le passage d'un outil plateau porte-outils dans le magasin et vice versa, on a déjà pensé à utiliser les deux mouvements précités de la machine, mais, jusqu'à maintenant, on a toujours été conduit à recourir à un organe intermédiaire, notamment une navette, ou encore un bras double animé d'un mouvement axial combiné avec un mouvement de pivotement, comme par exemple, dans un tour horizontal, présenté par la société SANDVIK-COROMANT à l'Exposition de la Machine-Outil de Chicago en 1978. Dans tous les cas, ces diverses solutions conduisent à des structures relativement compliquées et onéreuses.

On connaît aussi, par exemple, par la demande allemande DE-A-2 031 219, des tours horizontaux dans lesquels un magasin d'outils cylindrique est monté à pivotement sur un arbre vertical supporté par un système de deux chariots croisés horizontaux portés par une glissière longitudinale supérieure dont les deux extrémités reposent, respectivement, sur les sommets de deux montants solidaires du bâti de la machine. Le porte-outil de travail est un support à deux positions qui peut recevoir l'outil préparé pour la prochaine opération d'usinage; ce support est monté à pivotement autour d'un axe vertical sur un chariot transversal porté par une coulisse longitudinale mobile le long du banc du tour. Pour procéder aux échanges des outils, on amène le magasin d'outils au-dessus du plateau porte-outils et, au moyen d'un dispositif logé à l'intérieur du magasin, qui est creux, on fait remonter, dans le magasin, l'outil du plateau qui vient de servir et l'on fait descendre, sur ce plateau, le nouvel outil qu'on vient de sélectionner dans le magasin. On remarquera que, dans une telle structure, il est prévu un premier système de chariots croisés pour supporter le porte-outil de travail et un deuxième système de chariots croisés pour supporter le magasin, de façon telle qu'on puisse effectuer les changements d'outil en temps masqué, c'est-à-dire pendant qu'un outil est en cours d'usinage. La structure de la machine est relativement compliquée. De plus, il s'agit d'un type de machine différent de celui concerné par l'invention parce que le support d'outil est conçu pour ne recevoir qu'un seul outil, alors que dans la machine de l'invention, le support d'outils est une tourelle ou plateau rotatif sur lequel sont montés d'avance tous les outils nécessaires aux opérations d'usinage et que le magasin a pour but essentiel de permettre la fourniture d'outils neufs en remplacement d'outils usagés.

Le but de l'invention est d'obtenir le même résultat que celui obtenu par la machine exposée à Chicago, dont il a été question plus haut, mais par des moyens plus simples. Pour cela, on commence par tirer parti des avantages de la disposition connue en soi qui consiste à monter des outils directement, chacun, dans une glissière de la partie marginale du plateau rotatif munie d'un dispositif de blocage individuel de chaque outil dans sa glissière. Puis, selon l'invention, le magasin d'outils est muni de cases à glissières de rangement d'outils, dont les sorties sont situées le long du trajet d'un outil, porté par le plateau porte-outils dans une position d'indexage angulaire prédéterminée correspondante de chargement, sous l'action d'un premier des deux mouvements précités, les directions des glissières de rangement d'outils dans le magasin d'outils et de la glissière de réception dudit outil sur le plateau rotatif porte-outils étant parallèles à la direction de l'autre des deux mouvements précités, tandis qu'aux glissières de chaque case du magasin d'outils sont associés des moyens de chargement propres à faire passer un outil des glissières du magasin d'outil sur une glissière de réception d'un outil sur le plateau rotatif amené en regard de la case considérée du magasin d'outils.

Grâce à cette structure particulière, s'il s'agit, par exemple, d'un tour à broche horizontale dont les chariots à mouvements croisés sont animés respectivement des deux mouvements précités et supportent une tourelle porte-outils qui constitue le plateau rotatif dont l'axe est parallèle à celui de la broche porte-pièce du tour, on conçoit facilement que la tourelle, convenablement indexée angulairement, puisse venir chercher directement un outil dans le magasin sous l'action des deux mouvements en question, sans qu'on ait besoin, pour cela, de recourir à un bras double intermédiaire coulissant et pivotant.

Il s'agit là d'une solution dont le principe est très simple et dont les applications peuvent être très nombreuses. En effet, elle permet, par exemple, de changer tous les outils de la tourelle, ou seulement certains d'entre eux et de les remplacer par des outils fraîchement affûtés, dans ce cas, on peut prévoir un poste de déchargement des outils usés où les outils seront déposés par l'utilisation des deux mêmes mouvements. On peut aussi envisager, par exemple, de changer certains outils de la tourelle au cours d'un cycle d'usinage lorsque ce dernier nécessite l'utilisation d'un nombre d'outils différents plus grand que le nombre d'outils montés sur la tourelle. La disposition du magasin d'outils sur la machine peut être très variée suivant les applications.

L'invention sera mieux comprise à la lecture de la description qui va suivre et à l'examen des dessins annexés qui montrent, à titre d'exemple, une machine-outil suivant l'invention sous la forme d'un tour à commande numérique à broche horizontale et à tourelle porte-outils à axe parallèle à l'axe de la broche. Sur ces dessins la

fig. 1 est une vue de face du tour observé dans la direction de la flèche I de la fig. 2, les

fig. 2 et 3 sont des coupes verticales faites, respectivement, suivant les lignes II-II et III-III de la fig. 1, la

fig. 4 montre, à plus grande échelle, la partie supérieure de la fig. 2 comprise dans le cadre désigné par IV, et, la

fig. 5 est une coupe faite suivant le ligne V-V de la fig. 4.

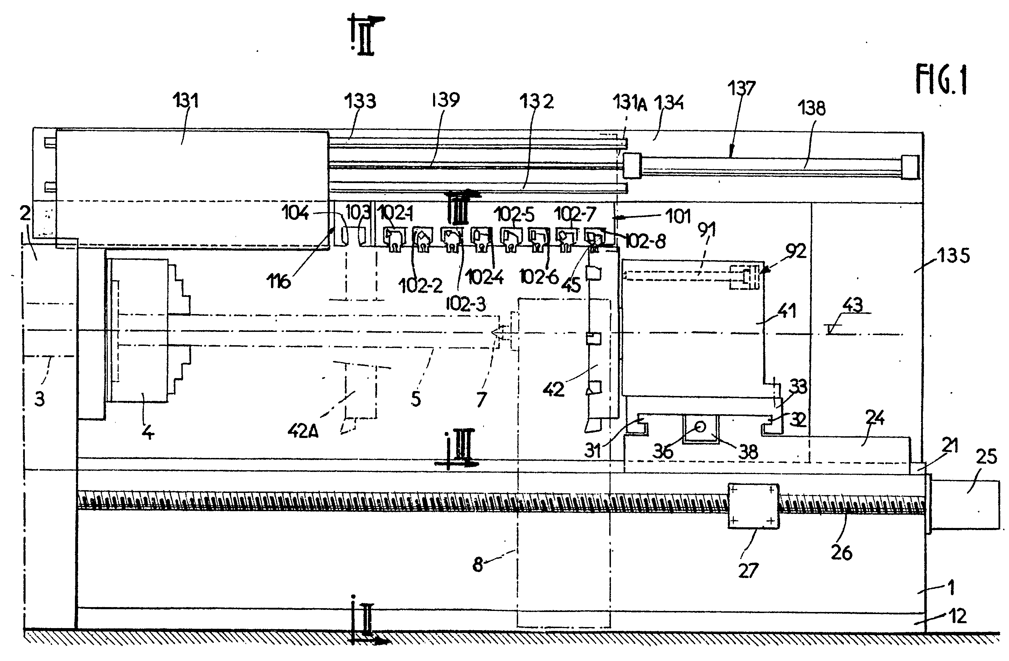

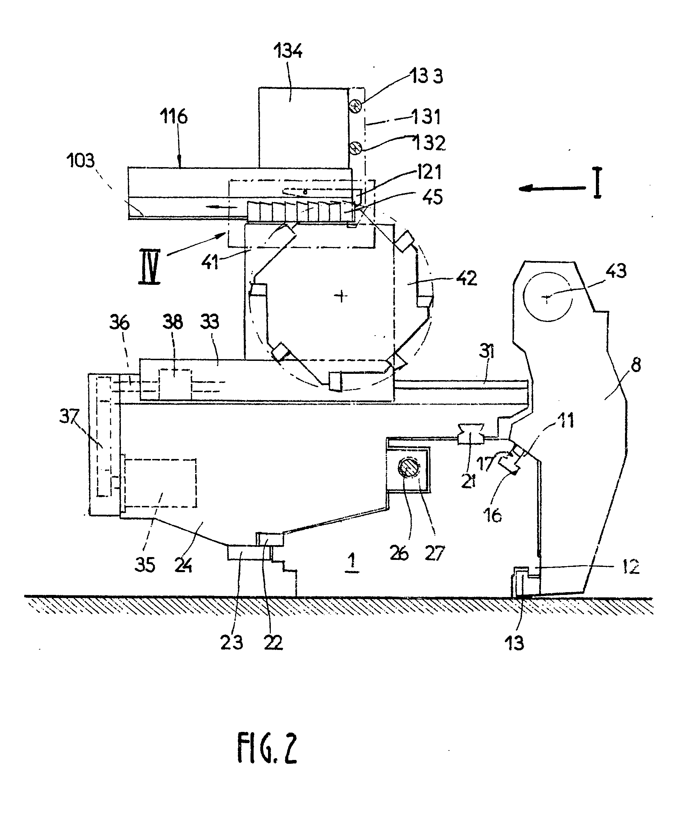

Le tour à commande numérique représenté sur les fig. 1 et 2 comporte un banc 1 sur une extrémité duquel est montée à demeure une poupée fixe 2 dans laquelle tourillonne une broche horizontale 3 qui porte un mandrin 4 de serrage d'une pièce à usiner 5 et qui est entraînée en rotation par tous moyens classiques appropriés (non représentés). Pour supporter des pièces longues, il est prévu une contre-pointe 7 portée par une poupée mobile 8 montée à coulissement sur le banc 1 au moyen d'une glissière supérieure à faces inclinées 11 et d'une glissière inférieure de section rectangulaire 12 munie d'une bride 13; dans une rainure 16 de section en »T« du banc, associée à la glissière supérieure 11, est monté un élément mobile 17 de section correspondante qui permet, suivant une disposition classique, d'immobiliser la poupée mobile 8 dans toute position longitudinale désirée sur le banc.

Sur une glissière longitudinale supérieure 21 et une glissière longitudinale inférieure 22 du banc 1 complétée par une bride 23, peut coulisser le chariot longitudinal 24 du tour, sous l'action d'un moteur 25 par l'intermédiaire d'une transmission qui comporte une vis à billes 26 reliée audit moteur et en prise avec un écrou 27 solidaire dudit chariot longitudinal.

La face supérieure du chariot longitudinal 24 est munie de glissières transversales 31, 32, orthogonales à la direction de l'axe de la broche 3 du tour dans l'exemple, et sur lesquelles peut se déplacer la coulisse transversale 33 sous l'action d'un moteur 35 par l'intermédiaire d'un mécanisme qui comporte une vis à billes 36 reliée au moteur 35 par une transmission 37 et sur laquelle est engagé un écrou 38 solidaire de la coulisse 33.

Sur la coulisse transversale 33, est fixé un bâti 41 sur lequel peut pivoter un plateau ou tourelle 42 dont l'axe de rotation 43 est parallèle à l'axe de la broche 3 du tour et, dans cet exemple, à la même hauteur que lui; l'un quelconque des outils, tels que 45, fixés d'une manière amovible sur la partie marginale dudit plateau, peut être amené en contact avec une partie de la pièce à usiner 5. On n'a pas représenté les moyens d'indexage angulaire du plateau 42 qui sont de tout type classique approprié.

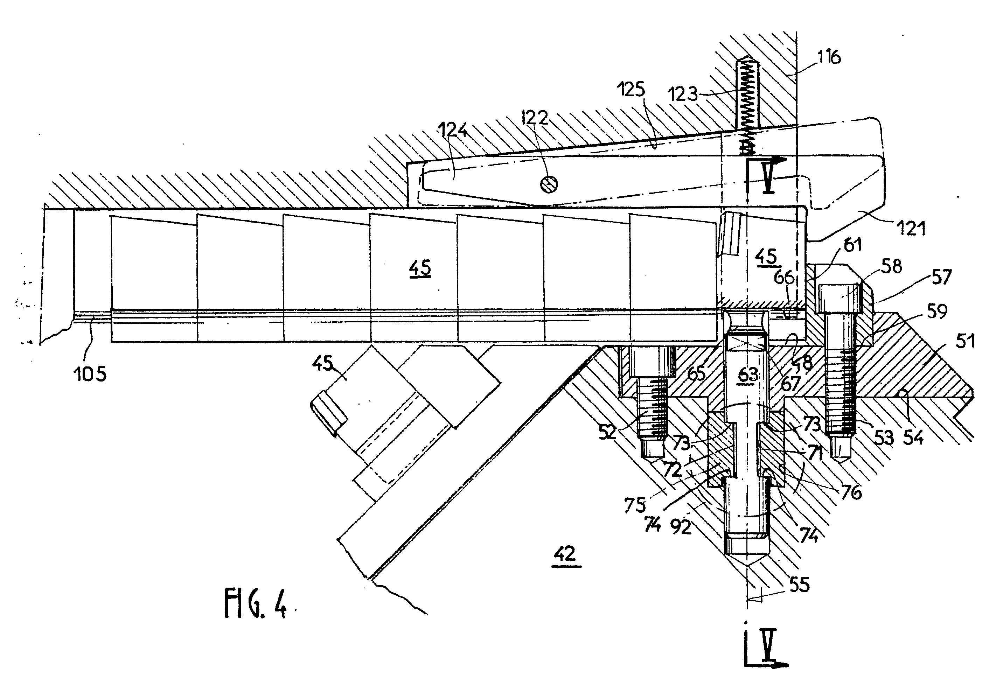

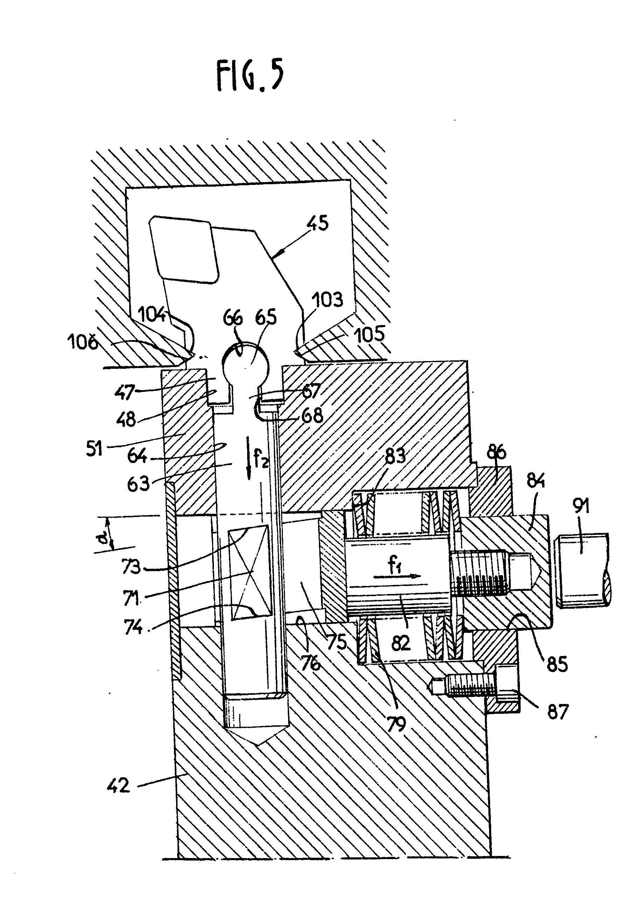

Chacun des outils, régulièrement répartis sur la circonférence du plateau 42, est fixé d'une manière particulière, connue en soi d'ailleurs, directement sur ledit plateau, c'est-à-dire sans le secours d'un porte-outil comme c'est le plus souvent le cas. A cet effet, dans le mode de réalisation représenté sur les dessins, plus particulièrement sur les fig. 4 et 5 qui sont à plus grande échelle, le corps de l'outil 45 lui-même présente un tenon 47 de section rectangulaire engagé, librement, mais avec un jeu très faible à l'état libre, dans une mortaise 48 de même largeur formant glissière pratiquée dans une plaque 51 fixée, par des vis 52, 53 contre un embrèvement 54 pratiqué dans la partie marginale du plateau 42 suivant un plan perpendiculaire au plan radial correspondant. La glissière 48 s'étend dans une direction tangentielle, c'est-à-dire perpendiculaire au plan radial 55. La position de travail de l'outil 45 est déterminée avec précision par une butée 57 qui est fixée, par une vis 58, dans un embrèvement 59 de la plaque 51 et qui présente une face active 61 perpendiculaire à la direction de la glissière 48.

L'outil 45 est maintenu fermement en place sur le plateau 42, d'une manière rigide et sans aucun jeu, au moyen d'un tirant 63 de forme générale cylindrique qui peut coulisser dans un alésage 64 pratiqué dans la plaque 51 et se prolongeant dans le plateau. Une extrémité de ce tirant 63 présente une tête 65 de forme cylindrique dont l'axe géométrique est perpendiculaire à celui dudit tirant. La tête 65 du tirant est engagée librement dans un évidement cylindrique conjugué 66 pratiqué en partie dans le corps de l'outil 45 et en partie dans son tenon 47, comme représenté. Un col 67 qui relie la tête 65 au tirant 63 passe avec du jeu dans une fente correspondante 68 du tenon 47 de l'outil. Sur une partie intermédiaire de la longueur du tirant 63, sont pratiqués deux méplats parallèles 71, 72, qui forment deux butées axiales 73, 74 dans des plans inclinés d'un angle »a« par rapport à un plan perpendiculaire à l'axe du tirant, de manière que ces deux butées forment des rampes d'une pente par exemple de l'ordre de 10%. Entre les butées 73 et 74, sont engagées, des deux côtés du tirant 63, les deux branches d'une chape 75 qui coulisse dans une gorge de section rectangulaire 76 du plateau pratiquée dans une direction parallèle à l'axe de ce dernier; les deux branches de la chape 75 présentent la même inclinaison que les butées axiales 73, 74 du tirant de telle manière qu'un coulissement de ladite chape dans la gorge 76, dans un sens ou dans l'autre, provoque un coulissement du tirant 63 dans le sens correspondant avec une force pratiquement multipliée par dix. La chape 75 est sollicitée à coulisser dans le sens de la flèche fl, qui correspond au blocage de l'outil sur le plateau, par un empilage de rondelles élastiques 79 enfilées sur une queue cylindrique 82 de la chape et dont une extrémité s'appuie contre un épaulement annulaire 83 du plateau et l'autre extrémité contre une face d'un écrou borgne 84 vissé sur l'extrémité filetée de la queue 82 de la chape. La surface extérieure de l'écrou 84 est cylindrique et guidée dans l'alésage 85 d'une plaque de fermeture 86 fixée au plateau par des vis 87. Lorsque le tirant 63 est sollicité dans le sens de la flèche f2 (fig. 5) sous l'action des rondelles élastiques 79, sa tête cylindrique 65 tend à écarter les parois de l'évidement 66 dans lequel il est logé et, par conséquent, à élargir légèrement le tenon 47 de l'outil, ce qui supprime tout jeu entre ledit tenon et les parois de la mortaise 48 et, par conséquent, rend l'outil parfaitement solidaire du plateau 42. La chape 75 peut être déplacée, à l'encontre de la force de l'empilage de rondelles élastiques 79 par un poussoir 91 (voir aussi fig. 1) qui est actionné par un vérin à fluide sous pression 92, par exemple un vérin hydraulique, porté par le bâti 41, et qui sert à débloquer l'outil 45.

Les moyens de commande des différents organes de la machine, notamment: le chariot longitudinal, la coulisse transversale, le plateau rotatif porte-outils 42, et le vérin 92 de déblocage des outils, sont placés sous le contrôle de l'installation de commande numérique (non représentée) de la machine.

Dans l'exemple représenté, on a supposé que le tour est équipé pour un cycle d'usinage nécessitant huit outils différents répartis sur la périphérie du plateau 42. On a supposé aussi que, lorsqu'un ou plusieurs outils étaient usés, voire la totalité des outils, on les enlevait en les déposant dans un magasin de déchargement unique spécialement prévu à cet effet et qu'on les remplaçait par des outils fraîchement affûtés sélectivement rangés dans des cases référencées d'un magasin de chargement. On verra plus loin que l'on peut aussi utiliser la même machine de manières différentes.

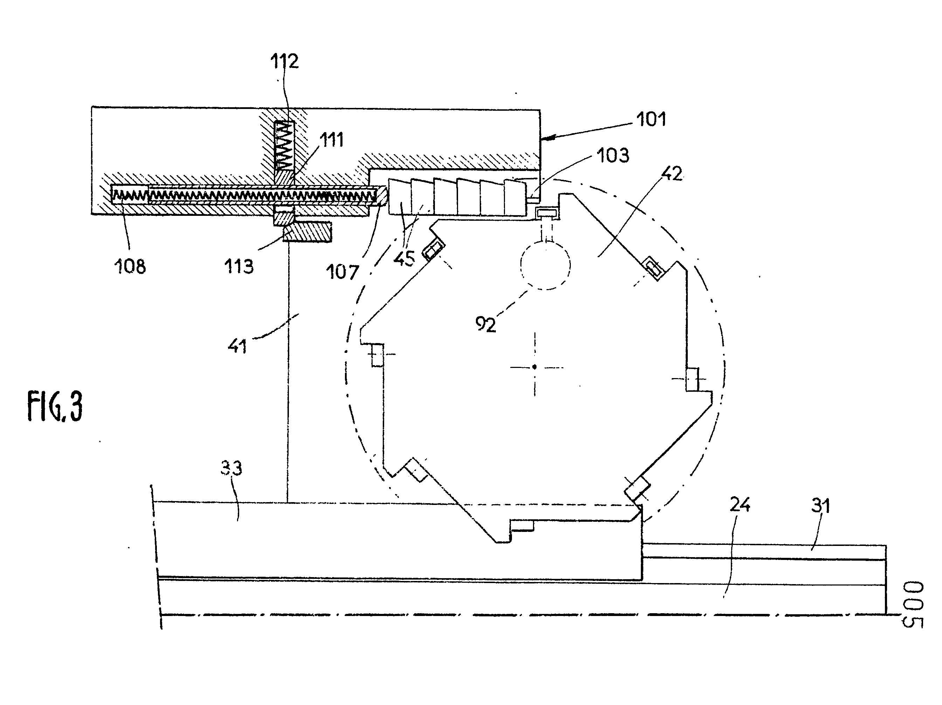

La machine comporte donc un magasin d'outils neufs désigné dans son ensemble par 101 (fig. 1 et 3) et comportant, dans l'exemple, huit cases référencées respectivement 102-1, 102-2, 102-3, 102-4, 102-5, 102-6, 102-7, 102-8, à la hauteur de l'outil qui se trouve à la partie supérieure du plateau rotatif porte-outils 42, et dans lesquelles sont rangés des outils 45 de configurations convenant respectivement à l'exécution de huit passes d'usinage différentes de la pièce 5 pour un cycle d'usinage. Chaque case se présente sous la forme d'un tunnel horizontal sans base, de direction orthogonale à l'axe de la broche 3 du tour et dont les parios latérales présentent des glissières de section rectangulaire 103, 104 (fig. 3 et 5) sur lesquelles sont engagées deux rainures de section conjuguée 105, 106 pratiquées dans les faces latérales des outils 45, de telle façon que les outils puissent coulisser librement dans le tunnel sous l'action d'un poussoir 107 soumis à l'action d'un ressort 108. Le poussoir est normalement bloqué, après la prise de chaque outil, par un verrou 111 appuyé contre le poussoir par un ressort 112 et pouvant, pour la prise d'un outil, être dégagé par une came 113 portée par le bâti 41 et susceptible de repousser ledit verrou, comme on le comprendra en détail plus loin. La came 113 est située sur le bâti 41 à un emplacement tel qu'elle se trouve au droit du verrou de la case du magasin devant laquelle on vient placer le plateau porte-outils pour la prise d'un outil.

Le magasin de déchargement 116 (fig. 1, 2 et 4) ressemble au magasin d'outils neufs, mais il ne comporte qu'une seule case dans laquelle on vient déposer indifféremment tous les outils, quelles que soient leurs configurations. Cette case présente aussi deux glissières latérales 103, 104 de guidage des outils. On récupère les outils usés à la sortie du magasin de déchargement par tous moyens appropriés.

L'entrée du magasin de déchargement 116 est munie d'un cliquet de retenue 121 (fig. 4) destiné à éviter tout risque de sortie inopinée d'un outil par cette extrémité du magasin, par exemple sous l'effet de vibrations. Le cliquet 121 est monté à pivotement sur un axe horizontal 122 porté par le magasin et il est soumis, à la fois, à l'action de la pesanteur et d'un ressort 123 dans le sens qui sollicite son bec à obstruer la partie supérieure de l'entrée dudit magasin. Le soulèvement du cliquet est assuré par la poussée directe d'un outil contre la partie antérieure inclinée de son bec et l'amplitude de son mouvement vers le bas est limitée par l'entrée en butée d'un prolongement 124 de sa partie arrière contre la paroi supérieure d'un embrèvement 125 du magasin dans lequel il pivote.

Afin d'éviter que les copeaux d'usinage et le liquide d'arrosage ne puissent envahir les magasins d'outils, ceux-ci sont équipés d'un carter de protection 131 (fig. 1 et 2) monté à coulissement sur deux rails horizontaux 132, 133 portés par une traverse supérieure 134 qui fait partie du bâti de la machine et qui repose, par ses deux extrémités, respectivement, sur la poupée fixe 2 et sur un montant 135. C'est cette traverse qui supporte aussi les magasins d'outils 101 et 116. On peut faire passer le carter de protection 131 de l'une à l'autre de deux positions, à savoir: sa position escamotée (représentée en traits pleins sur la fig. 1) pendant le déchargement et la prise d'un outil et sa position active de protection des magasins indiqué en traits interrompus en 131A sur la fig. 1, au moyen d'un vérin à fluide sous pression 137, par exemple un vérin hydraulique, dont le cylindre 138 est fixé sur la traverse supérieure 134, tandis que sa tige de piston 139 est attachée audit carter 131. Les mouvements de ce vérin sont placés également sous le contrôle de la commande numérique de la machine.

Le fonctionnement de la machine est le suivant:

On suppose qu'on vient de terminer l'usinage d'une pièce 5 et qu'on désire enlever tous les outils du plateau parcequ'ils ont besoin d'être remplacés par des outils fraîchement affûtés. On amène d'abord le carter de protection 131 dans sa position escamotée représentée sur la fig. 1 en traits pleins, on amène le chariot longitudinal 24 dans sa position pour laquelle le plateau porte-outils 42 se trouve dans la position indiquée en traits interrompus en 42A sur la fig. 1, c'est-à-dire au droit du magasin de déchargement d'outils 116, on remarque que, pour la position d'indexage actuelle du plateau porte outils, le dernier outil utilisé se trouvait en position d'usinage et que, en même temps, un autre outil se trouve à la partie supérieure du plateau et c'est cet autre outil qui va être évacué le premier. A cet effet, on fait reculer la coulisse 33, l'outil 45 en question soulève le cliquet de retenue 121 (fig. 2 et 4) et s'engage dans l'entrée du magasin de déchargement 116, sur les glissières 103, 104 de celui-ci; éventuellement, il pousse devant lui d'autres outils s'il y en a déjà dans le magasin; lorsqu'il est pratiquement complètement engagé dans le magasin, le cliquet de retenue 121 retombe derrière lui pour l'empêcher définitivement de ressortir; on débloque l'outil du plateau au moyen du vérin 92 (fig. 1); on fait avancer la coulisse 33 de sorte que le plateau porte-outils 41, porté par la coulisse, abandonne l'outil qui vient d'être déposé dans le magasin de déchargement.

On indexe le plateau porte-outils 42 dans une deuxième position angulaire pour pouvoir présenter, au magasin de déchargement, un deuxième outil et l'on recommence les opérations qu'on vient d'exécuter pour l'évacuation du premier outil. On introduira ainsi successivement dans le magasin de déchargement tous les outils qui se trouvaient sur le plateau rotatif porte-outils.

Il s'agit maintenant d'équiper le plateau d'un nouveau jeu d'outils fraîchement affûtés. Pour mettre en place un premier outil, on positionne le chariot longitudinal 24 sur le banc du tour de manière à amener le plateau porte-outils convenablement indexé angulairement, en regard du magasin 102-1 du premier outil; on libère le dispositif de blocage correspondant sur le plateau porte-outil au moyen du vérin 92, on fait reculer la coulisse 33; la came 113 (fig. 3) libère le verrou 111 de blocage du poussoir 107 qui, sous l'action du ressort 108 fait brusquement avancer tous les outils rangés dans le magasin; le premier outil s'engage, par son tenon 47, dans la mortaise 48 de la plaque 51 correspondante portée par le plateau porte-outils et s'avance jusqu'à venir porter contre la butée 61 (fig. 4). On libère le tirant de blocage de l'outil qui, désormais, fait corps avec le plateau; on fait avancer la coulisse et, avant que l'outil suivant dans le magasin n'ait atteint la sortie, la came 113 portée par le bâti 41 solidaire de la coulisse relâche le verrou 111 qui bloque le poussoir 107 et l'empêche de poursuivre son mouvement d'expulsion des outils hors du magasin. On fait avancer suffisamment la coulisse pour qu'on puisse, en avant du groupe de magasins, faire pivoter le plateau porte-outils sans risque d'interférence avec lesdits magasins. On fait passer le plateau porte-outils dans une deuxième position angulaire et l'on amène le chariot longitudinal du tour dans la position pour laquelle le plateau porte-outils se trouve maintenant devant le deuxième magasin de chargement 102-2. Pour le chargement d'un deuxième outil, on répète les opérations qu'on vient d'exposer au sujet du chargement d'un premier outil et l'on recommence ces opérations jusqu'à ce que les huit nouveaux outils aient été mis en place sur le plateau porte-outils. On ramène le carter de protection 131 en position de service indiquée en 131A sur la fig. 1; la machine est prête pour de nouveaux cycles d'usinage et peut travailler jusqu'à ce que les outils présentent un degré d'usure justifiant leur remplacement.

Dans une autre hypothèse, on peut envisager qu'un ou plusieurs outils s'usent plus vite que d'autres; dans ce cas, on peut n'évacuer que les outils usés et les remplacer par d'autres, il suffira d'indexer convenablement le plateau porte-outils angulairement et de le présenter devant les magasins intéressés.

On pourrait encore, dans une autre hypothèse, supposer que l'usinage d'une pièce nécessite un nombre d'outils plus grand que n'en peut recevoir le plateau porte-outils, de sorte qu'indépendamment du remplacement d'outils usés par des outils neufs, on peut alors envisager des changements d'outils au cours d'un cycle d'opérations d'usinage. Dans cette hypothèse, il conviendrait alors, aux moments opportuns du cycle, d'évacuer les outils et d'en saisir d'autres dans le magasin de la manière décrite plus haut, avec une sélection convenable des positions d'indexage angulaire du plateau porte-outils et des positionnements longitudinaux du chariot du tour.

On pourrait encore modifier légèrement les entrées des magasins de chargement pour pouvoir y introduire éventuellement les outils qu'on enlève, au fur et à mesure, du plateau rotatif.

## Revendications

1. Machine-outil à commande numérique avec magasin d'outils (101) et plateau rotatif porte-outils (42) porté par un organe de la machine (41), mobile dans les directions de deux mouvements contrôlés par la commande numérique de la machine et les outils (45) étant montés directement, chacun, dans une glissière (48) de la partie marginale du plateau rotatif munie d'un dispositif (63) de blocage individuel de chaque outil dans sa glissière, caractérisée en ce que le magasin d'outils (101) est muni de cases à glissières (103, 104) de rangement d'outils (45), dont les sorties sont situées le long du trajet d'un outil, porté par le plateau porte-outils (42) dans une position d'indexage angulaire prédéterminée correspondante de chargement, sous l'action d'un premier des deux mouvements précités, les directions des glissières (103, 104) de rangement d'outils dans le magasin d'outils (101) et de la glissière (48) de réception dudit outil sur le plateau rotatif porte-outils (42) étant parallèles à la direction de l'autre des deux mouvements précités, tandis qu'aux glissières de chaque case du magasin d'outils (101) sont associés des moyens de chargement (107) propres à faire passer un outil (45) des glissières (103, 104) du magasin d'outils sur la glissière (48) de réception d'un outil sur le plateau rotatif (42) amené en regard de la case considérée du magasin d'outils.

2. Machine-outil suivant la revendication 1, caractérisée en ce que la direction de l'un des deux mouvements précités est parallèle à l'axe du plateau rotatif porte-outils (42).

3. Machine-outil suivant la revendication 1, caractérisée en ce qu'elle comporte un magasin de déchargement d'outils (116) analogue au magasin d'outils à charger (101).

4. Machine-outil suivant la revendication 3, caractérisée en ce que l'entrée du magasin de déchargement d'outils (116) est située sur le même trajet que celui des sorties du magasin d'outils à charger (101).

5. Machine-outil suivant la revendication 1, caractérisée en ce que les moyens de chargement sont constitués par un poussoir (107) sollicité par un ressort (108) et soumis à l'action d'un verrou (111) contrôlé par un organe (113) soumis aussi au deuxième mouvement précité.

6. Machine-outil suivant la revendication 3, caractérisée en ce que l'entrée du magasin de déchargement d'outils (116) est muni d'un cliquet (121) de retenue des outils introduits dans ledit magasin.

7. Machine-outil suivant l'une quelconque des revendications 1 à 6, caractérisée en ce que la machine est un tour à broche rotative portepièce horizontale (3) dans lequel le plateau rotatif porte-outils (42) dont l'axe de rotation est parallèle à celui de la broche rotative du tour est porté par une coulisse transversale (33) montée sur un chariot longitudinal (24), les premier et deuxième mouvements précités étant, respectivement, ceux du chariot longitudinal et de la coulisse transversale.

## Patentansprüche

1. Numerisch gesteuerte Werkzeugmaschine mit einem Werkzeugmagazin (101) und einem Werkzeugrevolverkopf (42), der von einem Maschinenorgan (41) getragen ist, das in Richtung zweier von der numerischen Steuerung der Maschine gesteuerter Bewegungen verfahrbar ist, wobei die Werkzeuge (45) jeweils unmittelbar in einer im Randbereich des Werkzeugrevolverkopfes vorgesehenen Gleitführung (48) montiert sind, und wobei der Werkzeugrevolverkopf (42) mit einer Sperrvorrichtung (63) zur individuellen Verriegelung des Werkzeuges in seiner Gleitführung ausgestattet ist, dadurch gekennzeichnet, daß das Werkzeugmagazin (101) mit Gleitführungen (103, 104) versehene Fächer für das Einreihen der Werkzeuge (45) aufweist, daß die Ausgänge dieser Fächer längs der Bewegungsbahn eines Werkzeuges angeordnet sind, das von dem Werkzeugrevolverkopf (42) durch eine erste der genannten beiden Bewegungen in eine der Beschickung entsprechende vorbestimmte fixierbare Winkelposition verbracht ist, daß die Richtungen der in dem Werkzeugmagazin (101) vorgesehenen Gleitführungen (103, 104) für das Einreihen der Werkzeuge einerseits und der an dem Werkzeugrevolverkopf (42) vorgesehenen Gleitführung (48) für die Aufnahme des genannten Werkzeuges andererseits zur Richtung der anderen der beiden genannten Bewegungen parallel verlaufen, und daß den Gleitführungen jedes Faches des Werkzeugmagazin (101) Beschickungsorgane (107) zugeordnet sind, mittels derer ein Werkzeug (45) von den Gleitführungen (103, 104) des Werkzeugmagazins auf die an dem Werkzeugrevolverkopf (42) zur Aufnahme eines Werkzeuges vorgesehene Gleitführung (48) verbringbar ist, wenn der Werkzeugrevolverkopf (42) in eine dem jeweiligen Fach des Werkzeugmagazins gegenüberliegende Position geführt ist.

2. Werkzeugmaschine nach Anspruch 1, dadurch gekennzeichnet, daß die Richtung einer der beiden genannten Bewegungen parallel zur Achse des Werkzeugrevolverkopfes (42) verläuft.

3. Werkzeugmaschine nach Anspruch 1, dadurch gekennzeichnet, daß ferner ein Magazin (116) für das Abladen von Werkzeugen vorgesehen ist, das dem Magazin (101) für die zuzuführenden Werkzeuge analog ist.

4. Werkzeugmaschine nach Anspruch 3, dadurch gekennzeichnet, daß der Eingang des Magazins (116) für das Abladen von Werkzeugen sich auf der gleichen Bewegungsbahn befindet wie die Ausgänge des Magazins (101) für die zuzuführenden Werkzeuge.

5. Werkzeugmaschine nach Anspruch 1, dadurch gekennzeichnet, daß das Beschickungsorgan von einem Stößel (107) gebildet ist, der von einer Feder (108) beaufschlagt ist und der Wirkung eines von einem ebenfalls der zweiten der genannten Bewegungen unterworfenen Organ (113) gesteuerten Riegels (111) unterliegt.

6. Werkzeugmaschine nach Anspruch 3, dadurch gekennzeichnet, daß der Eingang des Magazins (116) für das Abladen der Werkzeuge mit einer Klinke (121) zur Halterung der in das Magazin (116) eingebrachten Werkzeuge versehen ist.

7. Werkzeugmaschine nach einem der Ansprüche 1 bis 6, dadurch gekennzeichnet, daß die Maschine eine Drehbank mit waagerechter Werkstückspindel (3) ist, bei welcher der Werkzeugrevolverkopf (42) mit parallel zur Achse der Werkstückspindel (3) verlaufender Achse von einem Querschlitten (33) getragen ist, der seinerseits auf einem Längsschlitten (24) montiert ist und daß die genannte erste und die genannte zweite Bewegung die Bewegungen des Längsschlittens bzw. des Querschlittens sind.

## Claims

1. Numerically controlled machine tool with tool magazine (101) and rotary tool holding chuck (42) carried by a member of the machine (41), movable in the directions of two movements controlled by the numeric control of the machine and the tools (45) each being mounted directly in a slide (48) on the edge part of the rotary chuck provided with separate fixing means (63) for each tool in its slide, characterized in that the tool magazine (101) is provided with slide units (103, 104) for positioning of the tools (45), the outlets of which are located along the path of a tool, carried by the tool holding chuck (42) in a corresponding predetermined angled index loading position, under the action of a first of said two movements, the directions of the tool positioning slides (103, 104) in the tool magazine (101) and of the slide (48) for receiving said tool on the rotary tool holding chuck (42) being parallel to the direction of the other of the said two movements, whilst with the slides of each unit of the tool magazine (101) there are associated loading means (107) adapted to pass a tool (45) from the tool magazine slides (103, 104) on to the tool receiving slide (48) on the rotating chuck (42) positioned opposite the relevant tool magazine unit.

2. Machine tool according to claim 1, characterized in that the direction of one of the said two movements is parallel to the axis of the rotary tool holding chuck (42).

3. Machine tool according to claim 1, characterized in that it includes a tool unloading magazine (106) similar to the tool loading magazine (101).

4. Machine tool according to claim 3, characterized in that the inlet of the tool unloading magazine (116) is located on the same path as that of the outlets of the tool loading magazine (101).

5. Machine tool according to claim 1, characterized in that the loading means are constituted by a pusher (107) urged by a spring (108) and subjected to the action of a locking pin (111) controlled by a member (113) subjected also to said second movement.

6. Machine tool according to claim 3, characterized in that the inlet of the tool unloading magazine (116) is provided with a catch (121) for holding tools fed into said magazine.

7. Machine tool according to any one of claims 1 to 6, characterized in that the machine is a horizontal workpiece holding rotary spindle lathe (3) in which the rotary tool holding chuck (42), the rotation axis of which is parallel to that of the rotary spindle of the lathe, is carried by a transverse slot (33) mounted on a longitudinal carriage (24), said first and second movements being, respectively, that of the longitudinal carriage and of the transverse slot.

FIG.1

FIG. 2

FIG.3

FIG. 4

# FIG.5